# FASCICULE DE BREVET EUROPEEN

(11) **EP 4 185 519 B1**
(45) Date de publication et mention de la délivrance du brevet: **05.06.2024**
(21) Numéro de dépôt: 21754812.2
(22) Date de dépôt: 15.07.2021
(51) Int. Cl.: B64C 11/06, F04D 29/32, F04D 29/34, F04D 29/64

(54) **TURBOMACHINE D'AERONEF COMPORTANT DES AUBES D'HELICE A CALAGE VARIABLE**
FLUGZEUGTURBINENTRIEBWERK MIT VERSTELLPROPELLERSCHAUFELN
AIRCRAFT TURBINE ENGINE COMPRISING VARIABLE-PITCH PROPELLER BLADES

(30) Priorité: 24.07.2020 FR 2007809; 24.07.2020 FR 2007812
(43) Date de publication de la demande: 31.05.2023
(73) Titulaire: SAFRAN AIRCRAFT ENGINES, 75015 Paris (FR)
(72) Inventeur: JOUDON, Vincent, 77550 MOISSY-CRAMAYEL (FR); COTTET, Clément, 77550 MOISSY-CRAMAYEL (FR); COURTIER, Vivien Mickaël, 77550 MOISSY-CRAMAYEL (FR); JABLONSKI, Laurent, 77550 MOISSY-CRAMAYEL (FR); SERVANT, Régis Eugène Henri, 77550 MOISSY-CRAMAYEL (FR)
(74) Mandataire: Gevers & Orès
(86) Numéro de dépôt international: PCT/FR2021/051314
(87) Numéro de publication internationale: WO 2022/018357

(56) Documents cités:
- CH-A- 194 633
- DE-A1- 4 203 205
- US-A1- 2018 290 728

## Description

### Domaine technique de l'invention

La présente invention concerne le domaine des turbomachines d'aéronef et en particulier des hélices propulsives de ces turbomachines qui comportent des aubes à calage variable.

### Arrière-plan technique

L'état de l'art comprend notamment les documents FR-A1-3 017 163, US-A1-2016/272299, CH-A-194 633, DE-A1-42 03 205, US-A1-2002/008177, US-A1 -2015/110633 et FR-A1-3 080 322.

Une hélice de turbomachine d'aéronef peut être carénée, comme c'est le cas d'une soufflante par exemple, ou non carénée comme c'est le cas d'une architecture du type open-rotor par exemple.

Une hélice comprend des aubes qui peuvent être à calage variable. La turbomachine comprend alors un mécanisme permettant de modifier l'angle de calage des aubes afin d'adapter la poussée générée par l'hélice en fonction des différentes phases de vol.

La conception d'une aube d'hélice met en jeu plusieurs disciplines dont les objectifs sont généralement antagonistes. Elle doit permettre des performances aérodynamiques optimales (c'est-à-dire fournir une poussée en maximisant le rendement), garantir une tenue mécanique de l'aube (c'est-à-dire tenir les contraintes mécaniques résultant des chargements statiques et dynamiques) tout en limitant la masse ainsi que la signature acoustique. En particulier, l'amélioration des performances aérodynamiques de l'hélice tend vers une augmentation du BPR (*By Pass Ratio*), ce qui se traduit par une augmentation de son diamètre externe et donc de l'envergure des aubes.

Dans le même temps, sur certaines architectures de turbomachine, le démarrage moteur est effectué à un calage très ouvert, dit en drapeau. En effet, cette position de démarrage permet de consommer la puissance par le couple ce qui assure la sécurité machine en garantissant des régimes d'hélice faibles. Plus précisément, selon des considérations simples, la puissance est proportionnelle au produit du régime et du couple. Or, le couple est croissant avec l'incidence qui peut être augmentée via le calage. En effet, l'homme du métier en aérodynamique comprend que l'effort résultant sur un profil de pale est en première approximation perpendiculaire à la corde et peut se décomposer en deux composantes: la poussée selon l'axe moteur et la trainée de la pale dans le plan de l'hélice. Ainsi, avec l'augmentation du calage des aubes, l'effort résultant se déplace vers le plan d'hélice ce qui a pour effet d'augmenter la trainée du profil aérodynamique et de diminuer la poussée.

Par conséquent, dans le cas d'un démarrage en drapeau, la poussée générée par l'hélice est nulle, le couple est maximal et le régime minimal. Cependant, l'incidence devient tellement importante que les pales subissent alors un écoulement aérodynamique turbulent fortement décollé qui génère une forte excitation vibratoire. Cette excitation est à la fois large bande de par les petits vortex de la zone décollée, mais également intense sur certaines fréquences particulières dues aux grosses recirculations de Karman qui viennent faire osciller l'effort aérodynamique de façon importante. En particulier, sur des pales à large corde et de grande envergure qui génèrent beaucoup de trainée, cet effort est intense bien que le régime ne soit pas élevé.

Dans la technique actuelle, il est courant de fixer une aube à son support par une attache dite brochée. L'aube comprend un pied qui a une forme générale en queue d'aronde et qui est destiné à être engagé par complémentarité de formes dans une alvéole du support, cette alvéole étant classiquement réalisée par brochage.

Pour une pale à attache brochée, cet effort aérodynamique est tellement intense qu'il peut provoquer des mouvements de solide rigide du pied d'aube dans son alvéole qui s'apparentent à du rotulage. En effet, lors d'un démarrage en drapeau, le régime réduit de la soufflante ne permet pas de générer un effort centrifuge suffisant pour empêcher ces mouvements induits par l'effort aérodynamique. Il s'en suit un endommagement par frottement de la pale et de la cale intercalée entre le pied et le fond de l'alvéole, en quelques cycles seulement. Pour les mêmes raisons, cette problématique se pose éventuellement en situation d'entraînement en roue libre (ou « *windmilling* ») suite à une panne moteur car les aubes à calage variable sont généralement équipées d'un système de rappel en drapeau. De plus, une excitation vibratoire intense peut également survenir à des régimes de rotation beaucoup plus élevés sur les architectures non carénées à cause des effets d'installation du moteur sur l'aéronef et de la direction de l'écoulement infini amont. En effet, un moteur non caréné subit l'influence du sol et du fuselage ce qui provoque une distorsion dans l'alimentation de l'hélice, en vitesse d'écoulement, selon les azimuts moteur. Cela entraîne une réponse vibratoire des aubes d'hélice sur les premiers ordres moteurs 1N, 2N et 3N (éventuellement plus). D'autre part, en l'absence de manche d'entrée d'air, la direction de l'air qui s'écoule à travers les pales n'est pas parallèle à l'axe moteur. Cet angle de dérapage entraine des efforts dits « 1P » qui provoquent une réponse vibratoire des aubes d'hélice sur l'ordre moteur 1N. De façon similaire, ces efforts 1P peuvent également apparaître lors des phases de montées ou d'approche de l'avion car l'air s'écoule à travers les pales avec un angle d'incidence. Ces excitations vibratoires à régime de rotation élevées peuvent provoquer les mêmes endommagements par frottement évoqués ci-dessus si l'attache de l'aube n'est pas adaptée.

Pour l'ensemble de ces raisons, l'attache brochée n'est pas en l'état une solution viable pour des aubes d'hélice à calage variable, à large corde et de grande envergure.

Il existe donc un besoin d'un technologie d'attache d'une aube d'hélice à calage variable qui permette de limiter le rotulage de l'aube lors de toutes les phases de vol qui sont susceptibles d'exciter les modes vibratoires de l'aube.

### Résumé de l'invention

Selon un premier aspect, l'invention concerne une aube d'hélice à calage variable, pour une turbomachine d'aéronef, cette aube comportant une pale reliée à un pied, le pied comportant un corps plein logé dans un fût annulaire qui s'étend autour d'un axe de calage de l'aube,
caractérisée en ce que le corps comprend :
- une extrémité libre située du côté opposé à la pale, cette extrémité libre étant configurée pour coopérer par complémentarité de formes avec un système de commande du calage de l'aube, et comportant une section transversale, appelée section basse, qui a une forme non circulaire et une valeur Sb,
- une échasse située du côté de la pale, cette échasse comportant une section transversale, appelée section haute, qui a une valeur Sh, et
- un bulbe situé entre l'extrémité libre et l'échasse, ce bulbe présentant en section une forme arrondie convexe s'étendant entre l'extrémité libre et l'échasse et comportant au sommet de cette forme une section transversale, appelée section milieu, qui a une valeur maximale Sm qui est supérieure à Sh et Sb,
et en ce que le fût est fixé sur le corps et recouvre et épouse au moins une partie du bulbe et de l'échasse, le fût ayant une forme complémentaire en section du bulbe, au niveau de ladite section milieu, et de l'échasse, au niveau de ladite section haute.

Dans la présente demande, on entend par section transversale une section perpendiculaire à l'axe de calage de l'aube. On entend par bulbe, une partie renflée ou bombée, c'est-à-dire comportant un renflement ou un bombement qui s'étend autour de l'axe de calage dans le cas d'espèce.

L'invention propose ainsi une aube équipée d'un pied perfectionné particulièrement adapté pour limiter les risques de rotulage évoqués plus haut.

La particularité du pied de l'aube est liée notamment à la combinaison d'un bulbe de grande section transversale qui permet une rétention optimale de l'aube le long de son axe, et d'une échasse de plus faible section transversale qui limite le risque de perturbation aérodynamique du flux d'air traversant la pale et s'écoulant à proximité de son pied en fonctionnement. Par rapport à l'attache brochée actuelle, l'invention permet de limiter l'usure prématurée de l'aube lors des phases de vol qui sont susceptibles d'exciter les modes vibratoires de l'aube. Par ailleurs, le pied d'aube est très avantageux en termes d'encombrement et de finesse de profil aérodynamique.

L'aube selon l'invention peut comprendre une ou plusieurs des caractéristiques suivantes, prises isolément les unes des autres, ou en combinaison les unes avec les autres :
-- le pied ou le corps ne comprend pas de partie creuse ou évidée ;
-- le fût est indépendant du système de commande ;
   - la section basse est excentrée par rapport à l'axe de calage ;
-- la section basse a une forme ovale, oblongue, rectangulaire, carrée, etc. ;
   - la section milieu a une forme circulaire ; en variante, la section milieu a une forme non circulaire et par exemple ovale, oblongue, rectangulaire, carrée, etc. ;
   - la section haute a une forme non circulaire ;
-- la section haute a une forme ovale, oblongue, rectangulaire, carrée, etc. ;
   - le fût est réalisé en deux demi-coques rapportées et fixées sur le corps, les demi-coques étant jointes au niveau d'un plan de joint qui passe par ledit axe de calage ;
   - le fût est collé sur le corps ;
   - au moins une bague de frettage est montée autour des demi-coques pour les maintenir serrées contre le corps, cette bague de frettage s'étendant autour de l'axe de calage ;
   - une bague de frettage inférieure est montée sur une surface cylindrique basse du fût, et s'étend autour d'au moins une partie de l'extrémité libre du corps ;
   - une bague de frettage supérieure est montée sur une surface cylindrique haute du fût, et s'étend autour d'une partie du bulbe du corps ;
   - une bague de crabotage s'étend autour de l'axe de calage et est montée prisonnière autour de l'échasse, entre le bulbe et la pale, cette bague de crabotage comportant des dents externes de crabot configurées pour coopérer avec ledit système ;
   - la bague de crabotage est configurée pour être montée sur la surface cylindrique haute du fût.

La présente invention concerne également un ensemble comportant une aube telle que décrite ci-dessus et un système de commande du calage de cette aube, dans lequel le système comprend au moins deux paliers de guidage à roulement, qui s'étendent autour de l'axe de calage.

Avantageusement, un premier palier de guidage est situé entre les sections basse et milieu ou à la jonction entre l'extrémité libre et le bulbe du corps, et un second palier de guidage est situé entre les sections milieu et haute ou à la jonction entre le bulbe et l'échasse.

De préférence, le premier palier de guidage s'étend au moins en partie autour de la bague de frettage inférieure, et le second palier de guidage s'étend au moins en partie autour de la bague de frettage supérieure.

Les paliers de guidage assurent la reprise des actions mécaniques issues des efforts aérodynamiques et centrifuges s'appliquant sur l'aube en fonctionnement. Le palier inférieur peut être configuré pour assurer la rétention de l'aube au centrifuge et le palier supérieur peut être configuré pour assurer la reprise des moments de flexion issus des efforts aérodynamiques et centrifuges. La distance entre les paliers, le long de l'axe de calage, génère un bras de levier suffisant pour empêcher l'aube de rotuler, quelle que soit la phase de vol.

Avantageusement, le système comprend un bol s'étendant autour de l'axe de calage et intercalé entre le fût et les paliers de guidage, ce bol comportant une paroi de fond qui s'étend transversalement à l'axe et qui présente un évidement de réception de l'extrémité libre du corps, cet évidement ayant une forme complémentaire en section de cette extrémité libre, au niveau de ladite section basse.

De préférence, le bol comprend des dents internes de crabot configurées pour coopérer avec les dents externes de crabot de ladite bague de crabotage.

La présente invention concerne également une turbomachine, en particulier d'aéronef, comportant au moins une aube ou au moins un ensemble tel que décrit ci-dessus.

### Brève description des figures

D'autres caractéristiques et avantages ressortiront de la description qui suit d'un mode de réalisation non limitatif de l'invention en référence aux dessins annexés sur lesquels :
[Fig.1] la figure 1 est une vue schématique en perspective d'une aube d'hélice pour une turbomachine d'aéronef, et illustre la présente invention,

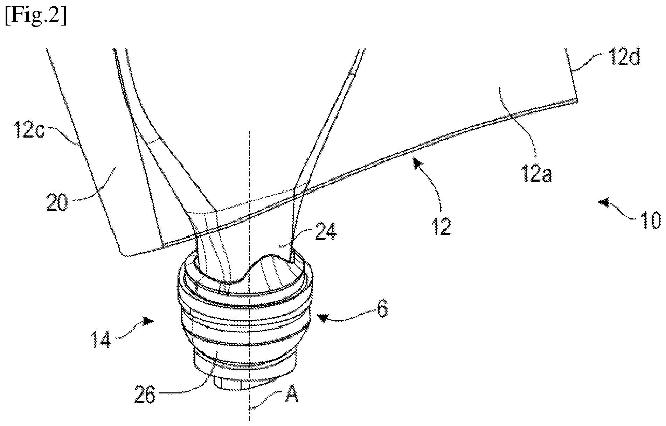

[Fig.2] la figure 2 est une vue à plus grande échelle d'une partie de la figure 1 et montre le pied de l'aube,
[Fig.3] la figure 3 est une vue schématique en perspective et avec éclaté partiel du pied de l'aube de la figure 1,
[Fig.4] la figure 4 est une vue schématique en perspective du corps du pied de l'aube de la figure 1,
[Fig.5] la figure 5 est une autre vue schématique en coupe axiale du pied de l'aube de la figure 1 et de paliers de guidage, le plan de coupe s'étendant le long d'une corde de la pale de l'aube,
[Fig.6] la figure 6 est une vue schématique en coupe axiale du pied de l'aube de la figure 1 et des paliers de guidage, le plan de coupe s'étendant transversalement à la corde de la pale de l'aube,
[Fig.7] la figure 7 est une autre vue schématique en coupe selon la ligne VII-VII de la figure 5,
[Fig.8] la figure 8 est une vue schématique en coupe axiale du pied de l'aube de la figure 1 et d'un mode de réalisation d'un système selon l'invention de commande du calage angulaire de cette aube,
[Fig.9] la figure 9 est une vue schématique en perspective d'un bol du système de la figure 8,
[Fig.10] la figure 10 est une vue schématique en perspective d'une bague de crabotage du système de la figure 8,
[Fig.11] la figure 11 est une vue schématique en perspective d'un anneau de verrouillage du système de la figure 8,
[Fig.12] la figure 12 est une vue schématique en perspective et en coupe axiale partielle du pied de l'aube et du système de la figure 8, et montre une première étape de montage,
[Fig.13] la figure 13 est une vue schématique en perspective et en coupe axiale partielle du pied de l'aube et du système de la figure 8, et montre une deuxième étape de montage,
[Fig.14] la figure 14 est une vue schématique en perspective et en coupe axiale partielle du pied de l'aube et du système de la figure 8, et montre une troisième étape de montage,
[Fig.15] la figure 15 est une vue schématique en perspective et en coupe axiale partielle du pied de l'aube et du système de la figure 8, et montre une quatrième étape de montage,
[Fig.16] la figure 16 est une vue schématique en perspective et en coupe axiale partielle du pied de l'aube et du système de la figure 8, et montre une cinquième étape de montage,
[Fig.17] la figure 17 est une vue schématique en perspective et en coupe axiale partielle du pied de l'aube et du système de la figure 8, et montre une sixième étape de montage, et
[Fig.18] la figure 18 est une vue schématique en coupe axiale du pied de l'aube de la figure 1 et d'une variante de réalisation d'un système selon l'invention de commande du calage angulaire de cette aube.

### Description détaillée de l'invention

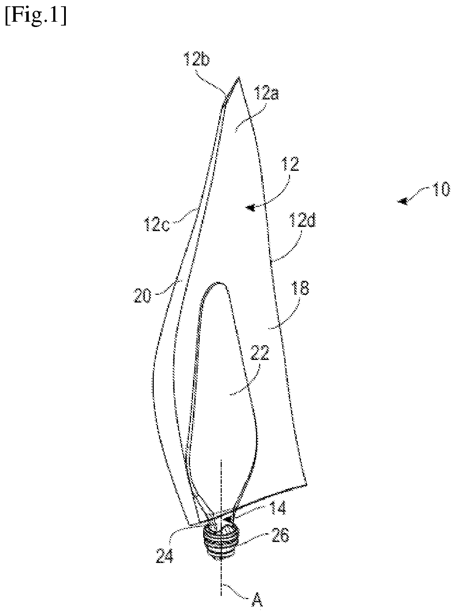

La figure 1 montre une aube 10 pour une hélice d'une turbomachine d'aéronef, cette hélice étant carénée ou non carénée.

L'aube 10 comprend une pale 12 reliée à un pied 14.

La pale 12 a un profil aérodynamique et comprend un intrados 12a et un extrados 12b qui sont reliés par un bord amont d'attaque 12c et par un bord aval de fuite 12d, les termes amont et aval faisant référence à l'écoulement des gaz autour de la pale en fonctionnement.

La pale 12 a une extrémité supérieure qui est libre, appelée sommet, et une extrémité inférieure qui est reliée au pied 14.

Dans l'exemple représenté, l'aube 10 est réalisée en matériau composite par un procédé d'injection appelé procédé RTM (acronyme de l'anglais *Resin Transfer Molding*)*.* Ce procédé consiste à préparer une préforme fibreuse 18 par tissage en trois dimensions puis à disposer cette préforme dans un moule et d'y injecter une résine polymérisable telle qu'une résine époxy, qui va imprégner la préforme. Après polymérisation et durcissement de la pale 12, son bord d'attaque 12c est en général renforcé par un bouclier métallique 20 rapporté et fixé, par exemple par collage.

L'aube 10 comprend ici un longeron 22 qui comprend une partie formant une âme de la pale 12 et qui est destinée à être insérée dans la préforme 18 avant l'injection de résine, et une partie qui s'étend du côté opposé au sommet de la pale 14 pour former une partie du pied 14, appelé corps 24.

Le longeron 22 est préférentiellement en matériau composite à matrice organique époxy renforcée par fibres de carbone tissées 3D avec la direction chaîne majoritairement orientée radialement et la trame majoritairement orientée selon la corde de la pale à hauteur de veine aérodynamique. Cependant, le longeron peut également être un assemblage plus avantageux mécaniquement de différents matériaux composites à matrice organique (thermodurcissable, thermoplastique ou élastomère) renforcés par fibres longues (carbone, verre, aramide, polypropylène) selon plusieurs arrangements fibreux (tissé, tressé, tricoté, unidirectionnel).

Bien que cela ne soit pas représenté, la pale 12 peut être creuse ou pleine et comprend une cavité interne remplie avec un matériau de remplissage du type mousse ou nid d'abeille. Ce matériau de remplissage est installé autour du longeron 22 et il est recouvert d'une peau en matériau composite à matrice organique pour augmenter la résistance de la pale à l'impact.

Le bouclier 20 peut être titane ou alliage de titane, inox, acier, aluminium, nickel, etc. L'intrados 12a voire l'extrados 12b de la pale 12 peut être recouvert d'un film polyuréthane pour la protection à l'érosion.

Le pied 14 comprend pour l'essentiel deux parties, à savoir ce corps 24 et un fût annulaire 26 qui s'étend autour du corps et d'un axe A de l'aube.

L'axe A est un axe d'allongement de l'aube 10 et de la pale 12 et en particulier un axe de calage de l'aube, c'est-à-dire l'axe autour duquel la position angulaire de l'aube est ajustée. C'est en général aussi un axe radial qui s'étend donc suivant un rayon par rapport à l'axe de rotation de l'hélice équipée de cette aube.

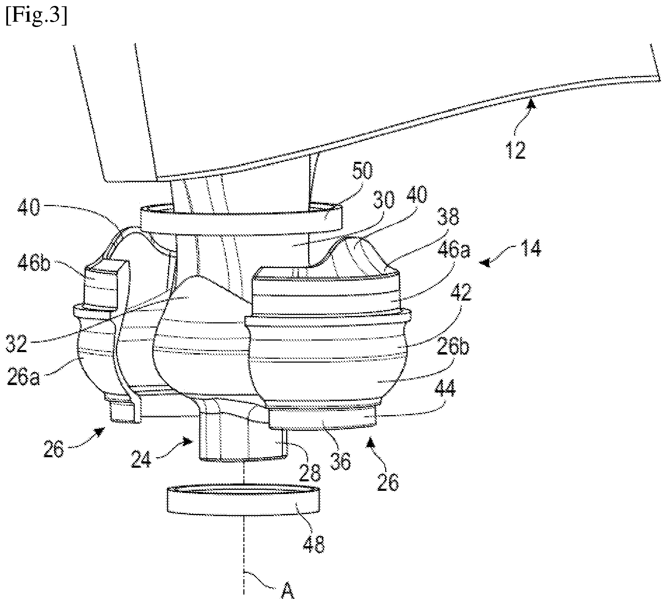

Le corps 24 du pied 14 a une forme particulière mieux visible aux figures 3 à 7.

Le corps 24 comprend pour l'essentiel trois parties à savoir :
- une extrémité libre 28 située du côté opposé à la pale 12,
- une échasse 30 située du côté de la pale, et
- un bulbe 32 situé entre l'extrémité libre et l'échasse.

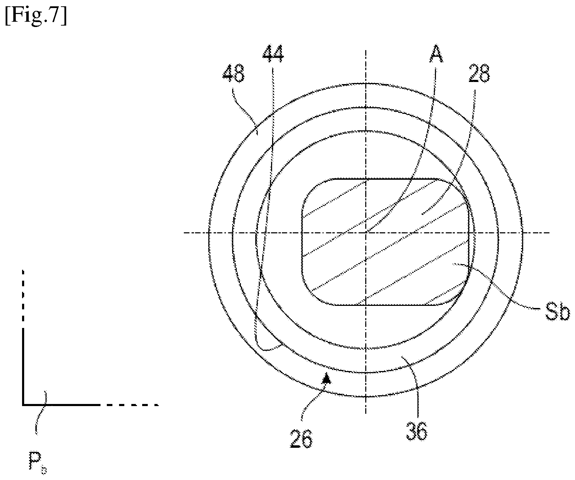

L'extrémité libre 28 a une forme générale parallélépipédique dans l'exemple représenté. Comme on peut le voir à la figure 7, cette extrémité 28 est désaxée ou décalée par rapport à l'axe A pour réaliser un détrompage ou indexage, comme cela sera expliqué plus en détail dans ce qui suit.

On définit Pb comme un plan transversal, c'est-à-dire un plan perpendiculaire à l'axe A, passant sensiblement par le milieu de l'extrémité 28, mesurée le long de l'axe A. Ce plan Pb est appelé plan bas ou inférieur. La figure 7 montre la forme en section de l'extrémité 28 dans ce plan Pb. Cette section, appelée section basse, a une valeur ou une aire, par exemple maximale, notée Sb et a une forme générale rectangulaire dans l'exemple représenté.

Comme cela sera également décrit dans ce qui suit, l'extrémité 28 est configurée pour coopérer avec un système 34 de commande du calage de l'aube.

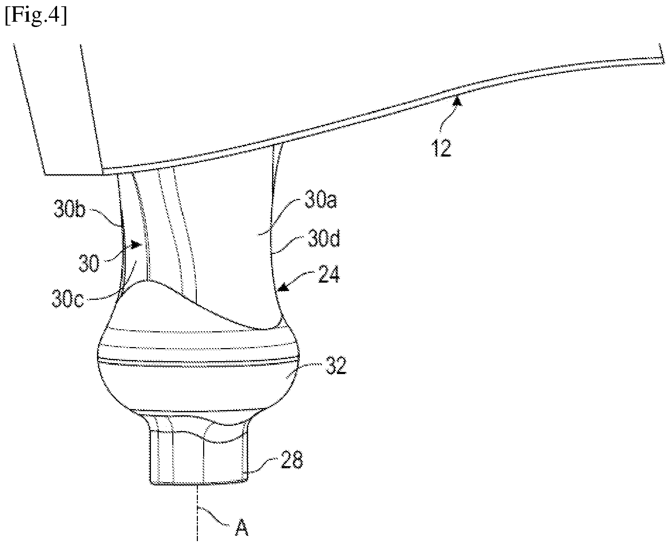

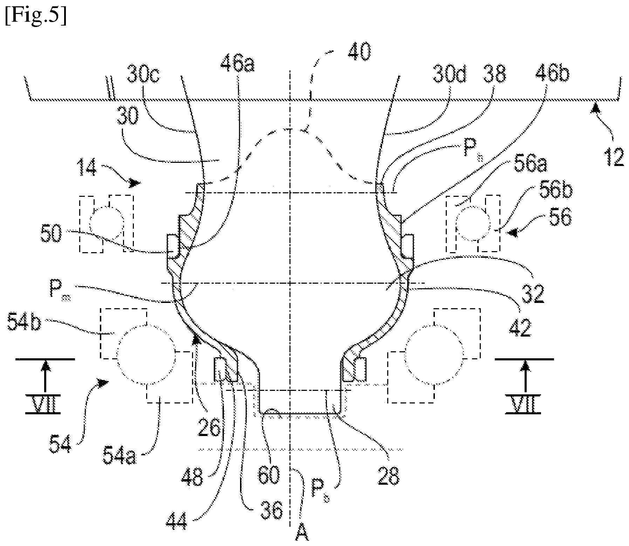

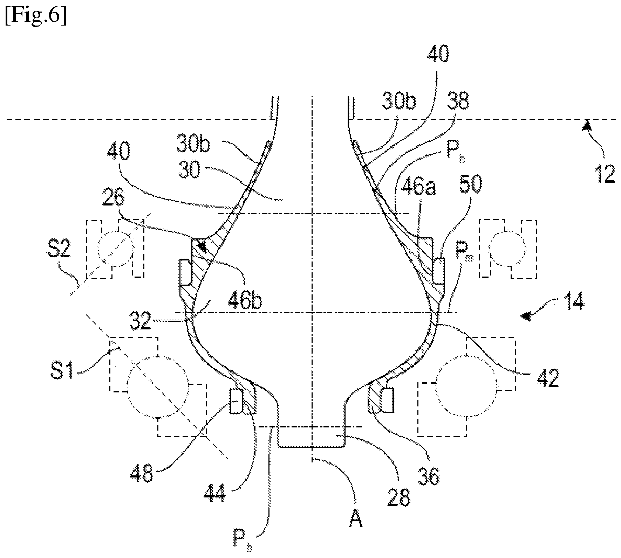

L'échasse 30 a une forme relativement complexe et peut être considérée comme comportant :
- deux flancs latéraux 30a, 30b, situés respectivement du côté de l'intrados 12a et de l'extrados 12b de la pale 12, qui convergent l'un vers l'autre le long de l'axe A et en direction du sommet de la pale 12 (cf. figures 4 et 6), et
- deux bords, respectivement amont 30c et aval 30d, qui au contraire divergent l'un de l'autre le long de l'axe A et en direction du sommet de la pale 12 (cf. figures 4 et 5).

On définit Ph comme un plan transversal passant par l'échasse 30, et en particulier son extrémité inférieure. Ce plan Ph est appelé plan haut ou supérieur. Dans ce plan, l'échasse peut avoir en section une forme non circulaire et par exemple ovale, oblongue, carrée ou rectangulaire. Cette section, appelée section haute, a une valeur ou une aire, par exemple maximale, notée Sh.

Le bulbe 32 a une forme générale renflée ou bombée, ce renflement ou bombement s'étendant tout autour de l'axe A.

On définit Pm comme un plan médian passant par le bulbe 32, et en particulier dans sa partie de plus grande section transversale, qui est notée Sm. Ce plan Pm est appelé plan moyen. Dans ce plan, le bulbe 32 peut avoir en section une forme circulaire bien que cette section ne soit pas limitative.

On comprend que le plan Pm est situé entre les plans Pb et Ph. La section transversale du bulbe 32 décroit du plan Pm (Sm) jusqu'au plan Ph, ainsi que depuis le plan Pm, jusque vers le plan Pb. On comprend donc que Sm est supérieur à Sb et Sh. Par ailleurs, dans l'exemple représenté, Sh est supérieur à Sb.

Le fût 26 est réalisé en deux demi-coques 26a, 26b, comme cela est visible à la figure 3, qui sont rapportées et fixées sur le corps 24, par exemple l'un du côté de l'intrados 12a de la pale et l'autre du côté de l'extrados 12b de la pale 12. Les demi-coques 26a, 26b sont ainsi jointes au niveau d'un plan de joint qui passe par l'axe A et qui s'étend sensiblement parallèlement à une corde de la pale 12.

Le fût 26 est avantageusement fixé sur le corps 24, de préférence par collage. La colle s'étend entre le fût et le corps, tout autour de l'axe A.

Le fût 26 est de préférence métallique (en acier, titane ou alliage de titane comme le TA6V). La colle est par exemple une colle époxy chargée en nodules thermoplastiques ou élastomères ou renforcée avec un tissu. Ce procédé d'assemblage par collage est particulièrement adapté du fait de la grande surface de contact entre la cavité du fût et le corps qui peut être composite. La présence d'un joint de colle est avantageuse car il permet de rattraper de légers défauts de forme. Le joint de colle permet aussi d'éviter les frottements à l'interface métal/composite et donc d'augmenter la durée de vie de l'aube.

Plusieurs possibilités sont envisagées pour rapporter le fût 26 sur le corps 24. Une première possibilité est de laisser volontairement un jeu entre les deux demi-coques 26a, 26b du fût 26 une fois rapportées de manière à bien appliquer la pression lors de la polymérisation du joint de colle. La phase de polymérisation peut se faire en autoclave avec l'ensemble de l'aube à l'intérieur d'une bâche à vide. Mais, il est également possible de réaliser cette opération sous presse. Cependant, l'inconvénient de laisser un jeu entre les deux demi-coques 26a, 26b est de moins maîtriser leur positionnement et donc de devoir réaliser une reprise en usinage de la surface externe. Une deuxième possibilité est de rapporter les demi-coques l'une contre l'autre autour du corps sans jeu existant. Cette stratégie est possible, par exemple en usinant un brut déjà découpé en deux parties et maintenues ensemble pendant l'opération d'usinage afin d'assurer la géométrie des surfaces externes une fois les demi-coques réassemblées. Cela permet de maîtriser le positionnement et la géométrie de la surface externe du fût 26 sans avoir besoin d'un usinage supplémentaire après collage. Dans tous les cas, des pions de positionnement ou des butées peuvent être envisagés pour assurer la position relative des demi-coques du fût.

La présence d'un joint de colle entre le corps et le fût n'est toutefois pas obligatoire bien qu'elle soit très avantageuse. Une alternative est d'utiliser des rondelles (ou ressorts) de précontrainte entre le fût et le corps composite afin de pousser radialement le corps et le plaquer sur les portées du fût. On peut également jouer sur la géométrie du fût pour faire en sorte de légèrement « pincer » le corps lorsque les deux demi-coques du fût sont rapportées autour du bulbe. Dans ce cas, c'est la déformation du fût qui génère une précontrainte. Il faut donc prévoir un outillage pour maintenir cette position avant assemblage final.

Comme cela est visible aux figures 5 et 6, le fût 26 recouvre et épouse au moins une partie du bulbe 32 et de l'échasse 30, et a une forme complémentaire en section du bulbe 32, au niveau de la section milieu Sm, et de l'échasse 30, au niveau de la section haute Sh.

Plus précisément, le fût 26 comprend trois parties dans l'exemple représenté,
- une extrémité inférieure 36 qui a une forme générale annulaire (cf. figures 5-7) et qui s'étend au niveau et autour de l'extrémité libre 28 du pied,
- une extrémité supérieure 38 qui s'étend au niveau du plan Ph et qui comprend deux lèvres latérales 40 appliquées sur les flancs 30a, 30b de l'échasse 30, et
- une partie médiane 42 appliquée sur le bulbe 32 et épousant de près sa forme.

Les lèvres 40 prennent appui sur les flancs 30a, 30b de l'échasse 30 et permettent de rigidifier le pied 14 de l'aube et de renforcer sa résistance à la torsion autour de l'axe de calage A.

Ils permettent en outre d'absorber de l'énergie en cas d'impact sur l'aube 10, comme par exemple l'ingestion d'un oiseau. Des congés peuvent présents sur ces lèvres pour éviter l'usure ou l'endommagement local du corps.

Les surfaces internes du fût 26 qui sont en contact avec le corps 24 servent de portées. Par rapport à une attache brochée, la surface de portée est maximisée par l'exploitation de l'ensemble de la circonférence du bas de l'aube. Sur une attache brochée, seules deux surfaces distinctes du pied d'aube, respectivement situées à l'intrados et à l'extrados sont en appui sur des portées alors que les surfaces du pied d'aube situées au bord d'attaque et au bord de fuite sont libres. Toujours en comparaison avec une attache brochée, la hauteur des portées dans la direction radiale est bien plus importante ce qui contribue également à augmenter considérablement leur surface. Cette grande surface d'appui permet de diminuer la pression de contact quel que soit le cas de fonctionnement.

Le fût 26 comprend deux surfaces cylindriques 44, 46a de montage de bagues de frettage 48, 50. Les bagues de frettage 48, 50 permettent de maintenir les demi-coques 26a, 26b serrées l'une contre l'autre et sur le corps 24. Les bagues de frettage 48, 50 s'étendent autour de l'axe A.

La surface 44 est située sur l'extrémité inférieure 36 et est orientée radialement vers l'extérieur par rapport à l'axe A. Elle reçoit la bague 48 par frettage qui est engagée depuis le bas et prend appui axialement sur une portée cylindrique située à la jonction de l'extrémité 36 et de la partie médiane 42 du fût 26.

La surface 46a est située sur la partie médiane 42 et est orientée radialement vers l'extérieur par rapport à l'axe A. Elle reçoit la bague 50 par frettage qui est engagée depuis le haut et prend appui axialement sur une portée cylindrique située à proximité du plan Pm.

On constate que la surface 46a est située juste à côté d'une surface cylindrique 46b qui est destinée à recevoir une bague d'immobilisation 52, comme cela sera décrit dans ce qui suit.

Les surfaces 44, 46a, ainsi que les bagues 48, 50, ont des diamètres différents dans l'exemple représenté. La surface 46a a un diamètre supérieur à celui de la surface 44 et donc la bague 50 a une diamètre supérieur à celui de la bague 48.

Les surfaces 46a, 46b peuvent avoir des diamètres identiques ou différents. La surface 46b peut par exemple avoir un diamètre légèrement inférieur à celui de la surface 46a. C'est notamment le cas où la bague 50 devrait être monté avec un jeu radial prédéterminé par rapport à cette surface 46b.

Les figures 5 et 6 permettent de constater que la bague 50 est située entre les plans Ph et Pm, et que la bague 48 est située entre les plans Pm et Ps.

Les figures 5 et 6 montrent également la position des bagues 48, 50 et des plans Pm, Ph, Ps par rapport à des paliers à roulement 54, 56 qui s'étendent autour de l'axe A et du pied 14.

Les paliers 54, 56 sont ici au nombre de deux et sont respectivement un palier inférieur 54 et un palier supérieur.

Les paliers 54, 56 sont du types à roulement à billes. Dans l'exemple représenté, ils ont des diamètres différents et leurs billes ont également des diamètres différents.

Le palier 54 s'étend sensiblement entre les plans Pm et Pb et donc autour d'une partie inférieure du bulbe 32. Il s'étend également autour de la bague 48. Ce palier 54 a un diamètre plus petit que l'autre palier 56, et ses billes ont un diamètre supérieur à celles de l'autre palier 56.

Le palier 54 est en outre à contact oblique. Dans l'exemple représenté, les points ou surfaces d'appui des billes sur les chemins de roulement de leurs bagues 54a, 54b sont situés sur une surface tronconique S1 qui s'étend le long de l'axe A et dont le plus grand diamètre est situé du côté du sommet de l'aube.

Le palier 56 s'étend sensiblement entre les plans Pm et Ph et donc autour d'une partie supérieure du bulbe 32. Il s'étend également autour de la bague 50. Le palier 56 est en outre à contact oblique. Dans l'exemple représenté, les points ou surfaces d'appui des billes sur les chemins de roulement de leurs bagues 56a, 56b sont situés sur une surface tronconique S2 qui s'étend le long de l'axe A et dont le plus grand diamètre est situé du côté de l'extrémité libre du pied de l'aube.

La position de la section milieu entre les deux paliers 54, 56 est très avantageuse en termes d'encombrement radial car une partie de la hauteur de portée entre la section milieu et la section haute se situe à l'intérieur du bol 58, contrairement à l'état de l'art sur les attaches brochées intégrées dans un pivot. Cela contribue à diminuer l'encombrement radial du système de commande 34.

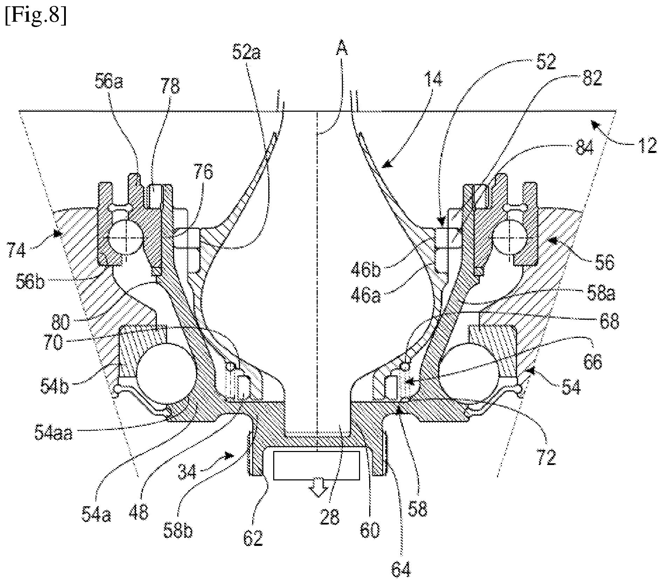

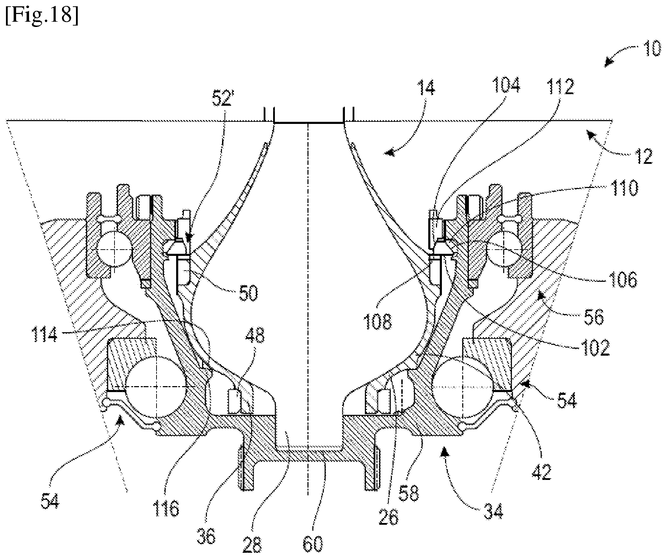

Les figures 8 à 17 illustrent un premier mode de réalisation du système et en particulier de la bague d'immobilisation 52, et la figure 18 illustre une variante de réalisation du système et de cette bague.

Le système 34 comprend un bol 58 comportant une paroi annulaire 58a s'étendant autour de l'axe A. Cette paroi 58a comporte une extrémité axiale inférieure fermée par une paroi de fond 58b, et une extrémité axiale supérieure ouverte et configurée pour autoriser le montage du pied 14 de l'aube à l'intérieur du bol.

La paroi de fond 58b est configurée pour coopérer par complémentarité de formes avec l'extrémité libre du pied 14, et donc avec l'extrémité 28 du corps 24, de façon à ce que le bol soit solidarisé en rotation avec le pied autour de l'axe.

Dans le cas présent, on comprend que la paroi de fond 58b comprend un évidement 60 ayant une section transversale non circulaire, et en particulier rectangulaire, et configuré pour recevoir l'extrémité 28 (figure 8). Comme on le voit à la figure 5, cet évidement 60 est excentré par rapport à l'axe A de façon analogue à l'extrémité 28 (cf. figure 7). Cet excentrement permet un indexage et un détrompage lors de l'insertion et du montage du pied dans le bol 58, une seule position d'engagement de l'extrémité 28 dans l'évidement 60 étant possible.

L'évidement 60 est situé sur une face supérieure ou interne de la paroi de fond 58b du bol 58, qui est donc située à l'intérieur du bol et orientée du côté du pied.

Le système 34 génère un couple au pied d'aube qui s'oppose au moment de torsion issu des efforts aérodynamiques et des efforts centrifuges. L'extrémité 28 du pied 14 pourrait être enveloppée dans le fût 26, comme le reste du corps 24 du pied 14. Dans ce cas, celui-ci aurait également une forme non circulaire afin de contraindre sa rotation. Cependant, il est avantageux de laisser sortir cette extrémité du corps en dehors du fût, comme évoqué dans ce qui précède, afin de contraindre directement la rotation du corps. On obtient ainsi un chemin d'effort plus direct, le moment de torsion s'appliquant directement sur le corps. La section basse possède des dimensions strictement inférieures à la dimension maximale de la section milieu afin de limiter l'encombrement circonférentiel à cette hauteur. En conséquence, le fût possède également un encombrement circonférentiel plus faible à cette hauteur qu'au niveau de la section milieu. Cela permet de diminuer le diamètre du palier inférieur qui se situe sous la section milieu. Donc, le pied d'aube peut être intégré plus bas radialement ce qui diminue fortement le rapport de moyeu théorique associé à l'intégration du pied. Or, l'homme du métier sait qu'un rapport de moyeu faible améliore les performances du moteur, notamment car celui-ci est plus compact et donc plus léger. Ce dernier point est un avantage très important de la solution technique comparée à la concurrence qui propose classiquement des fûts de forme externe cylindrique.

La paroi de fond 58b comprend une face inférieure ou externe, qui est située du côté opposé au pied 14, et qui comprend un prolongement cylindrique 62 s'étendant le long de l'axe A et comportant un filetage externe ou des cannelures rectilignes externes 64 pour l'accouplement en rotation du système avec un mécanisme de changement de pas qui n'est pas illustré et qui est commun aux différents systèmes 34 et aubes 10 de l'hélice.

Un organe 66 élastiquement déformable, tel qu'un ressort hélicoïdal, s'étend autour de l'axe A et est monté à l'intérieur du bol 58. Cet organe 66 prenant appui axialement sur la surface supérieure de la paroi de fond 58b, à la périphérie externe de cette surface dans l'exemple représenté, et est configuré pour solliciter axialement le pied de l'aube vers l'extérieur du bol c'est-à-dire du côté du sommet de l'aube.

L'organe 66 prend appui sur une portée cylindrique 68 du fût 26. Dans l'exemple représenté, l'organe 66 est centré par engagement de son extrémité supérieure sur et autour d'un rebord cylindrique 70 du fût, et par engagement de son extrémité inférieure sur et autour d'un rebord cylindrique 72 du bol situé à la périphérie externe de la paroi de fond 58b.

L'organe 66 s'étend ici autour de la bague de frettage 48.

Comme on le voit à la figure 8, le bol 58 est conçu pour supporter les paliers 54, 56 qui assurent le centrage et le guidage du bol autour de l'axe A vis-à-vis d'un carter 74 ou d'une structure fixe de la turbomachine.

Les paliers 54, 56 peuvent faire partie du système de commande. En particulier, au moins l'un des paliers de guidage peut avoir a sa bague interne qui est intégrée au bol.

C'est ici le cas du palier inférieur 54 qui a sa bague interne 54a intégrée au bol 58. En pratique, cela signifie que le bol comprend un chemin de roulement 54aa à sa périphérie externe sur laquelle roule directement les billes du palier 54. Ce chemin de roulement comprend une surface annulaire à section incurvée concave. Ce chemin de roulement est ici située à l'extrémité inférieure du bol et de la paroi 58a. La bague externe 54b du palier 54 est fixée au carter 74, par exemple par frettage. Par ailleurs, le bol 58 est avantageusement conçu pour appliquer une précontrainte au palier 54.

La bague externe 56b du palier 56 est fixée au carter 74, par exemple par frettage. Sa bague interne 56a est engagée sur et autour de l'extrémité supérieure libre du bol 58 et de la paroi 58a. Cette extrémité de la paroi 58a comprend une surface cylindrique externe 76 de montage de la bague interne 56a ainsi qu'un filetage externe de vissage d'un écrou 78 destiné à prendre appui axialement sur la bague interne 56a pour la maintenir serrée axialement contre un épaulement cylindrique externe 80 du bol 58.

La paroi 58a du bol comprend en outre à sa périphérie interne des moyens configurés pour coopérer avec la bague d'immobilisation 52 précitée.

La bague d'immobilisation 52 s'étend autour de l'axe A et est configurée pour être montée autour du pied 14. Cette bague d'immobilisation 52 est configurée pour être montée à l'intérieur du bol et pour coopérer respectivement avec le pied 14 et la paroi annulaire 58a du bol 58 afin d'assurer la rétention axiale du pied dans le bol.

Dans le mode de réalisation des figures 8 à 17, cette bague d'immobilisation 52 est une bague de crabotage qui comporte des dents externes 84 de crabot configurées pour coopérer avec des dents internes 82 de crabot complémentaires de la paroi annulaire 58a du bol 58.

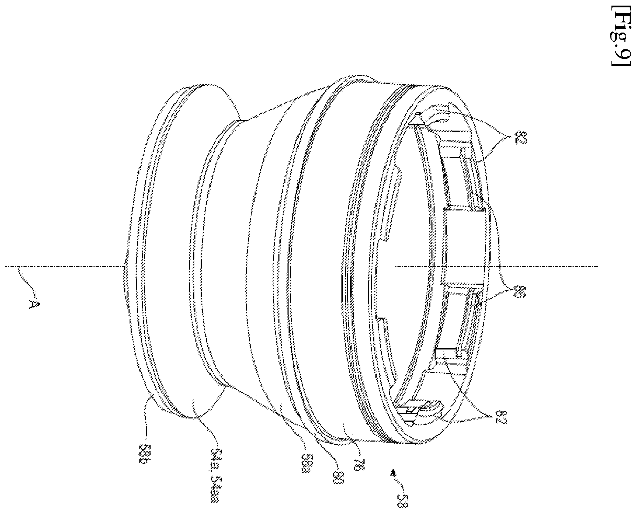

Les dents 82 du bol 58 sont mieux visibles à la figure 9. Ces dents sont régulièrement espacées autour de l'axe A. Elles sont au nombre de six dans l'exemple non limitatif représenté. Elles ont par exemple chacune une extension angulaire autour de l'axe A, comprise entre 20 et 30° environ. Chacune des dents 82 comprend à sa périphérie interne une rainure 86 orientée circonférentiellement par rapport à l'axe A. Les rainures 86 des dents 82 forment une gorge discontinue autour de l'axe A.

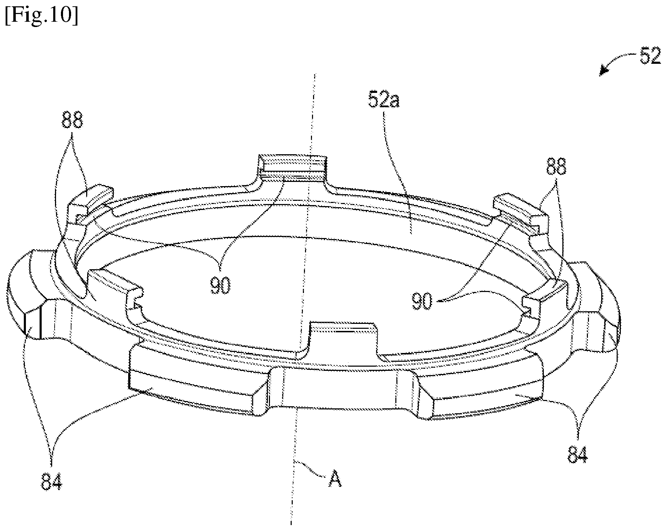

La bague de crabotage est mieux visible à la figure 10. Ses dents 84 sont régulièrement espacées autour de l'axe A. Elles sont au nombre de six dans l'exemple non limitatif représenté. Elles ont par exemple chacune une extension angulaire autour de l'axe A, comprise entre 20 et 30° environ.

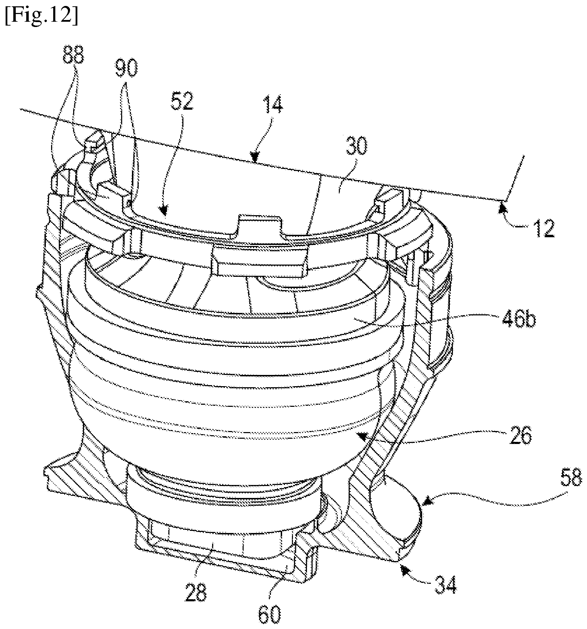

Les dents 84 sont complémentaires des dents 82 et sont configurées pour coopérer par crabotage avec ces dents. Le crabotage est un mode de montage bien connu dans le domaine aéronautique et qui sera illustré par les figures 12 à 17 illustrant un procédé de montage.

La bague 52 comprend une surface cylindrique interne 52a destinée à coopérer par glissement avec la surface 76 précitée du bol 58.

La bague 52 comprend une seconde série de dents 88, qui s'étendent axialement vers le haut, du côté du sommet de l'aube 10. Ces dents 88 sont également régulièrement espacées autour de l'axe A. Elles sont au nombre de six dans l'exemple représenté. Elles peuvent être disposées en quinconce vis-à-vis des dents 84, c'est-à-dire que les dents 88 sont alignées axialement avec les espaces circonférentiels situées entre les dents 84. A titre d'exemple non limitatif, les dents 88 ont chacune une extension angulaire autour de l'axe A, comprise entre 10 et 20° environ.

Chacune des dents 88 comprend à sa périphérie interne une rainure 90 orientée circonférentiellement par rapport à l'axe A. Les rainures 90 des dents 88 forment une gorge discontinue autour de l'axe A.

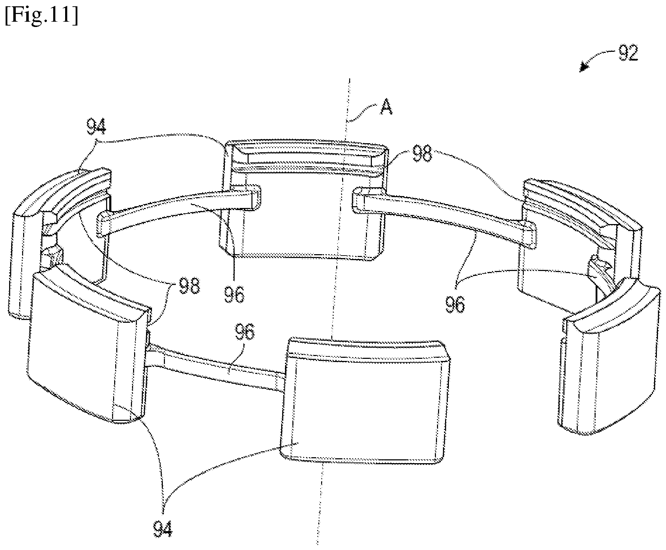

La figure 11 montre un anneau de verrouillage 92 qui est configuré pour être engagé axialement entre les dents 82, 84 de crabot pour empêcher la rotation de la bague 52 à l'intérieur du bol 58.

Cet anneau 92 comprend des patins 94, ici au nombre de six dans l'exemple non limitatif représenté, destinés à être engagés dans les espaces inter-dents s'étendant entre les dents 82 et 84. On comprend donc que ces patins 94 ont des formes complémentaires à celles de ces espaces et sont régulièrement espacés autour de l'axe A.

Dans l'exemple représenté, les patins 94 sont solidaires les uns des autres par des pontets 96 s'étendant circonférentiellement entre les patins 94. Les pontets 96 sont au nombre de cinq et s'étendent chacun entre deux patins 94 adjacents. Deux des patins 94 ne sont volontairement pas reliés ensemble par un pontet de façon à ce que l'anneau 92 soit ouvert. Cela peut simplifier le montage par écartement ou rapprochement de ces patins l'un de l'autre, lors du montage de l'anneau dans le système 34.

Chacun des patins 94 comprend à sa périphérie interne une rainure 98 orientée circonférentiellement par rapport à l'axe A. Les rainures 98 des patins 94 forment une gorge discontinue autour de l'axe A.

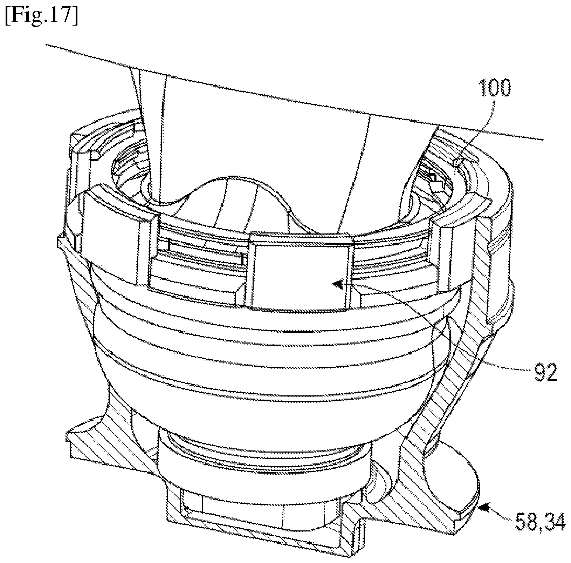

Le système comprend en outre un jonc annulaire 100 qui est seulement visible à la figure 17.

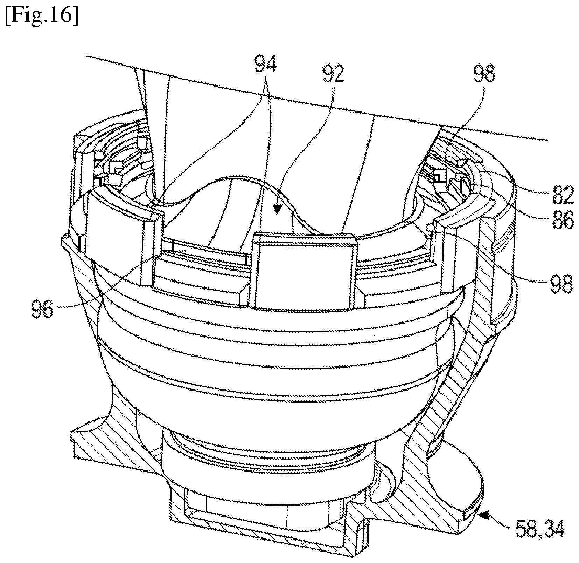

Le jonc 100 est monté dans le bol 58 pour bloquer axialement l'anneau de verrouillage 92 dans le bol 58. Le jonc 100 peut également être fendu ou ouvert pour faciliter son montage et est destiné à être engagé dans les rainures 86 des dents 82 du bol ainsi que les rainures 98 des patins 94 de l'anneau 92, lorsque ces rainures 86, 98 sont toutes situées ans un même plan perpendiculaire à l'axe A et sont disposées circonférentiellement les unes par rapport aux autres pour former une gorge complète autour de l'axe A (cf. figures 16 et 17).

On se réfère maintenant aux figures 12 à 17 qui illustrent un procédé de montage de l'ensemble formé par une aube 10 telle qu'illustrée à la figure 1 et un système 34 tel que représenté à la figure 8.

Dans la première étape illustrée à la figure 12, le pied 14 de l'aube 10 est engagé dans le bol 58 du système 34 par translation axiale le long de l'axe A, jusqu'à ce que l'extrémité 28 du corps 24 du pied s'engage dans l'évidement 60 du bol 58. Comme on le voit dans le dessin, la bague de frettage est déjà montée prisonnière autour de l'échasse 30 du corps du pied. Bien qu'il ne soit pas représenté dans cette figure, l'organe 66 (figure 8) est comprimé lors de l'insertion du pied 14 dans le bol 58.

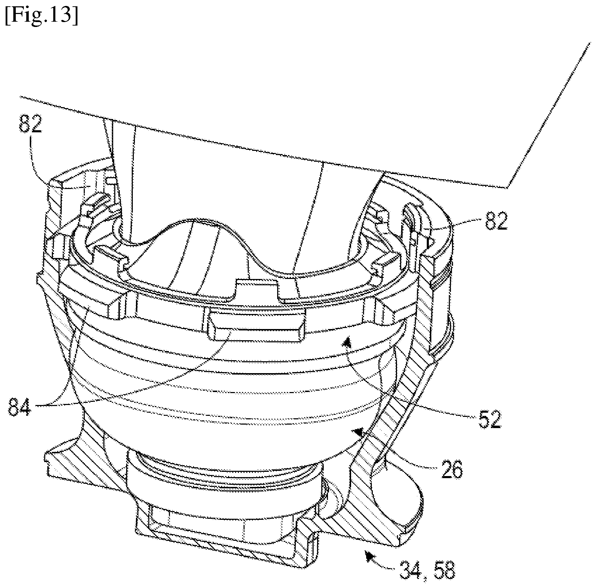

Dans la seconde étape illustrée par les figures 12 et 13, la bague de frettage est positionnée angulairement autour de l'axe A de façon à ce que ses dents 84 soient alignées avec les espaces situés entre les dents 82 du bol. La bague 52 est alors déplacée en translation axiale à l'intérieur du bol 58 jusqu'à ce que la bague 52 soit engagée sur la surface 46b du fût 26 et que les dents 84 soient situées juste en dessous des dents 82, comme illustré à la figure 13. Les rainures 90 prévues sur les dents peuvent servir à la préhension de la bague 52 par un outil approprié.

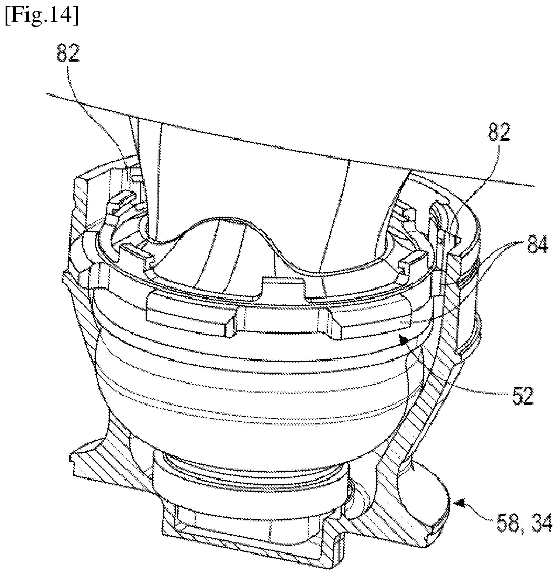

Dans la troisième étape illustrée par les figures 13 et 14, la bague 52 est déplacée en rotation autour de l'axe A de façon à ce que ces dents 82, 84 soient alignées axialement les unes avec les autres. Du fait de l'extension angulaire des dents dans l'exemple représenté, ce déplacement angulaire est ici de l'ordre de 25-30°. Les dents 88 peuvent servir à la préhension de la bague 52 et à sa rotation par l'outil précité. L'organe 66, non représenté, sollicite axialement le pied vers l'extérieur du bol, ce qui provoque l'appui axial des dents 84 sur les dents 82. Le pied est ainsi maintenu axialement à l'intérieur du bol et du système 34. En fonctionnement, les efforts centrifuges appliqués sur l'aube sont transmis par les dents 82, 84 au bol 58, ces efforts étant directement repris par le palier 54 dont la bague interne 54a est intégré au bol 58.

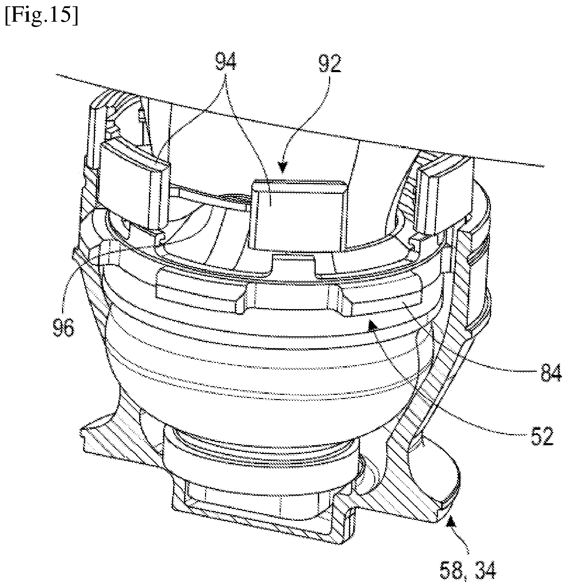

Dans la quatrième étape illustrée par les figures 15 et 16, l'anneau 92 est positionné angulairement autour de l'axe A de façon à ce que ses patins 94 soient alignés avec les espaces situés entre les dents 82, 84. L'anneau 92 est alors déplacé en translation axiale à l'intérieur du bol 58 jusqu'à ce que les patins 94 soient engagés dans ces espaces. Les pontets 96 peuvent alors prendre appui sur les dents 84 de la bague 52. L'anneau 92 empêche ainsi toute rotation de la bague 52 à l'intérieur du bol 58.

Dans la dernière étape illustrée par la figure 17, le jonc 100 est engagé dans les rainures 86, 98 alignées circonférentiellement les unes avec les autres. Le jonc 100 empêche un démontage accidentel de l'anneau 92.

On comprend que le démontage de l'aube est réalisé en réalisant les étapes précitées dans l'ordre inverse. On comprend également qu'une des étapes essentielles du montage et du démontage du pied concerne la bague d'immobilisation 52. Cette bague 52 est manipulable depuis l'extérieur d'une turbomachine, ce qui est particulièrement avantageux lors d'une opération de maintenance. Une aube peut être démontée et retirée de l'hélice par démontage et retrait d'un nombre minimum de pièces.

On se réfère à la figure 18 qui illustre une variante de réalisation de la bague d'immobilisation 52'. Cette bague 52' a en section transversale une forme de coin et est configurée, sous l'effet des forces centrifuges en fonctionnement, pour être sollicitée axialement vers l'extérieur du bol 58 et pour maintenir serré axialement le pied d'aube 14 par effet de coin.

Dans l'exemple représenté, la bague 52' a en demi-section axiale une forme générale trapézoïdale et comprend une surface inférieure 102 et deux surfaces latérales, respectivement interne 104 et externe 106. Les surfaces 102-106 sont annulaires et s'étendent autour de l'axe A.

La bague 52' est engagée autour du pied 14 et dans le bol et prend appui axialement par sa surface 102 sur la bague de frettage 50, ici par l'intermédiaire d'une rondelle 108.

La surface externe 106 de la bague coopère par appui et glissement axial avec une bague complémentaire 110 montée à l'intérieur du bol et autour de la bague 52'.

La bague 52' est sectorisée et formée de plusieurs secteurs agencés autour de l'axe A avec une certaine distance circonférentielle les uns des autres. A titre d'exemple non limitatif, les secteurs sont au nombre de six et régulièrement réparties autour de l'axe A.

Enfin, un écrou 112 est vissé sur un filetage interne de l'extrémité supérieure du bol 58 et coopère par appui et glissement axial avec la surface interne 104 de la bague 52'.

Le vissage et le serrage de l'écrou 112 provoque à la fois un déplacement axial des secteurs de la bague 52' en appui sur la rondelle 108, et une sollicitation radiale de ces secteurs contre la bague 110 de forme complémentaire. Tout jeu de montage est alors supprimé.

Le fut 26 comprend un épaulement cylindrique 114 en appui contre un épaulement cylindrique 116 complémentaire du bol 58, ici à la jonction entre la partie médiane 42 et l'extrémité inférieure du fût 26. L'intérêt de cette variante est notamment de reprendre les efforts centrifuges afin de réaliser la rétention de l'aube mais aussi de remplacer l'organe 66 précité en appliquant directement une précontrainte entre le fût 26 et donc le pied 14 de l'aube, et la bague intérieure 54a du palier 54.

D'autres variantes de réalisation non représentées sont envisageables, parmi lesquelles :
- les demi-coques 26a, 26b du fût 26 peuvent être rapportées sur le corps 24 par boulonnage, rivetage, soudure, etc. ;
- la colle de liaison du fût 26 au corps 24 peut être une colle époxy mais il peut également s'agir d'un élastomère ou d'une colle thermoplastique. Il est également possible d'utiliser un film antiadhésif pour laisser la possibilité d'un mouvement relatif en limitant l'usure par frottement ;
- toujours à propos de l'interface fût / corps, on peut aussi combiner plusieurs solutions techniques ensemble parmi celles proposées (collage, précontrainte par rondelles ou ressorts, précontrainte par la géométrie du fût) ; ces solutions sont combinables indépendamment de l'existence d'un jeu entre les deux parties du fût ;
- bien que cela soit moins avantageux, la position radiale du palier assurant la rétention au centrifuge de l'aube peut être inversée avec la position radiale du palier qui assure la reprise des moments de flexion issus des efforts aérodynamiques et centrifuges.

## Revendications

1. Aube (10) d'hélice à calage variable, pour une turbomachine d'aéronef, cette aube (10) comportant une pale (12) reliée à un pied (14), le pied (14) comportant un corps plein (24) logé dans un fût annulaire (26) qui s'étend autour d'un axe (A) de calage de l'aube,
**caractérisée en ce que** le corps (24) comprend :
- une extrémité libre (28) située du côté opposé à la pale (12), cette extrémité libre (28) étant configurée pour coopérer par complémentarité de formes avec un système (34) de commande du calage de l'aube, et comportant une section transversale, appelée section basse, qui a une forme non circulaire et une valeur Sb,
- une échasse (30) située du côté de la pale (12), cette échasse (30) comportant une section transversale, appelée section haute, qui a une valeur Sh, et
- un bulbe (32) situé entre l'extrémité libre (28) et l'échasse (30), ce bulbe (32) présentant en section une forme arrondie convexe s'étendant entre l'extrémité libre et l'échasse et comportant au sommet de cette forme une section transversale, appelée section milieu, qui a une valeur maximale Sm qui est supérieure à Sh et Sb,
et **en ce que** le fût (26) est fixé sur le corps (24) et recouvre et épouse au moins une partie du bulbe (32) et de l'échasse (30), le fût (26) ayant une forme complémentaire en section du bulbe (32), au niveau de ladite section milieu, et de l'échasse (30), au niveau de ladite section haute.

2. Aube (10) selon la revendication 1, dans laquelle :
- la section basse est excentrée par rapport à l'axe de calage (A), et/ou
- la section milieu a une forme circulaire, et/ou
- la section haute a une forme non circulaire.

3. Aube (10) selon l'une des revendications précédentes, dans laquelle le fût (26) est réalisé en deux demi-coques (26a, 26b) rapportées et fixées sur le corps (24), les demi-coques (26a, 26b) étant jointes au niveau d'un plan de joint qui passe par ledit axe de calage (A).

4. Aube (10) selon la revendication précédente, dans laquelle le fût (26) est collé sur le corps (24).

5. Aube (10) selon la revendication 3 ou 4, dans laquelle au moins une bague de frettage (48, 50) est montée autour des demi-coques (26a, 26b) pour les maintenir serrées contre le corps (24), cette bague de frettage (48, 50) s'étendant autour de l'axe de calage (A).

6. Aube (10) selon la revendication précédente, dans laquelle une bague de frettage inférieure (48) est montée sur une surface cylindrique basse (44) du fût (26), et s'étend autour d'au moins une partie de l'extrémité libre (28) du corps (24).

7. Aube (10) selon la revendication 5 ou 6, dans laquelle une bague de frettage (50) supérieure est montée sur une surface cylindrique haute (46a) du fût (26), et s'étend autour d'une partie du bulbe (32) du corps (24).

8. Aube (10) selon l'une des revendications précédentes, dans laquelle une bague (52) de crabotage s'étend autour de l'axe de calage (A) et est montée prisonnière autour de l'échasse (30), entre le bulbe (32) et la pale (12), cette bague (52) de crabotage comportant des dents externes (84) de crabot configurées pour coopérer avec ledit système (34).

9. Aube (10) selon la revendication 8, en dépendance de la revendication 7, dans laquelle la bague (52) de crabotage est configurée pour être montée sur la surface cylindrique haute (46a) du fût (26).

10. Ensemble comportant une aube (10) selon l'une des revendications précédentes et un système (34) de commande du calage de cette aube, dans lequel le système (34) comprend au moins deux paliers de guidage (54, 56) à roulement, qui s'étendent autour de l'axe de calage (A).

11. Ensemble selon la revendication précédente, dans lequel un premier palier de guidage (54) est situé entre les sections basse et milieu ou à la jonction entre l'extrémité libre (28) et le bulbe (32) du corps (24), et un second palier de guidage (56) est situé entre les sections milieu et haute ou à la jonction entre le bulbe (32) et l'échasse (30).

12. Ensemble selon la revendication précédente, l'aube (10) étant telle que définie aux revendications 6 et 7, dans lequel le premier palier de guidage (54) s'étend au moins en partie autour de la bague de frettage inférieure (48), et le second palier de guidage (56) s'étend au moins en partie autour de la bague de frettage supérieure (50).

13. Ensemble selon l'une des revendications 10 à 12, dans lequel le système (34) comprend un bol (58) s'étendant autour de l'axe de calage (A) et intercalé entre le fût (26) et les paliers de guidage (54, 56), ce bol (58) comportant une paroi de fond (58b) qui s'étend transversalement à l'axe (A) et qui présente un évidement (60) de réception de l'extrémité libre (28) du corps (24), cet évidement (60) ayant une forme complémentaire en section de cette extrémité libre (28), au niveau de ladite section basse.

14. Ensemble selon la revendication 13, l'aube (10) étant telle que définie à la revendication 8 ou 9, dans lequel le bol (58) comprend des dents internes (82) de crabot configurées pour coopérer avec les dents externes (84) de crabot de ladite bague (52) de crabotage.

15. Turbomachine, en particulier d'aéronef, comportant au moins une aube (10) selon l'une des revendications 1 à 9 ou au moins un ensemble selon l'une des revendications 10 à 14.

## Patentansprüche

1. Schaufel (10) eines Propellers mit variabler Feststellposition für ein Turbotriebwerk eines Luftfahrzeugs, wobei diese Schaufel (10) ein Schaufelblatt (12) umfasst, das mit einem Fuß (14) verbunden ist, wobei der Fuß (14) einen vollen Körper (24) umfasst, der in einer ringförmigen Hülse (26) untergebracht ist, die sich um eine Feststellachse (A) der Schaufel erstreckt,
**dadurch gekennzeichnet, dass** der Körper (24) umfasst:
- ein freies Ende (28), das sich auf der gegenüberliegenden Seite des Schaufelblatts (12) befindet, wobei dieses freie Ende (28) konfiguriert ist, um durch Formenkomplementarität mit einem System (34) zur Steuerung der Feststellposition der Schaufel zusammenzuwirken und einen querliegenden Abschnitt umfasst, als tiefliegender Abschnitt bezeichnet, der eine nicht-kreisförmige Form und einen Wert Sb aufweist,
- eine Strebe (30), die sich auf der Seite des Schaufelblatts (12) befindet, wobei diese Strebe (30) einen querliegenden Abschnitt, als hochliegender Abschnitt bezeichnet, umfasst, der einen Wert Sh aufweist, und
- einen Wulst (32), der sich zwischen dem freien Ende (28) und der Strebe (30) befindet, wobei dieser Wulst (32) im Querschnitt eine gerundete konvexe Form aufweist, die sich zwischen dem freien Ende und der Strebe erstreckt und an der Spitze dieser Form einen querliegenden Abschnitt, als mittlerer Abschnitt bezeichnet, umfasst, der einen maximalen Wert Sm aufweist, der größer als Sh und Sb ist,
und dadurch, dass die Hülse am Körper (24) befestigt ist und mindestens einen Teil des Wulstes (32) und der Strebe (30) abdeckt und daran angepasst ist, wobei die Hülse (26) im Querschnitt am mittleren Abschnitt zum Wulst (32) und am hochliegenden Abschnitt zur Strebe (30) eine komplementäre Form aufweist.

2. Schaufel (10) nach Abschnitt 1, wobei:
- der tiefliegende Abschnitt in Bezug auf Feststellachse (A) exzentrisch ist, und/oder
- der mittlere Abschnitt eine kreisförmige Form aufweist, und/oder
- der hochliegende Abschnitt eine nicht-kreisförmige Form aufweist.

3. Schaufel (10) nach einem der vorstehenden Ansprüche, wobei die Hülse (26) aus zwei Halbschalen (26a, 26b) gefertigt ist, die am Körper (24) angegliedert und befestigt sind, wobei die zwei Halbschalen (26a, 26b) in einer Verbindungsebene, die durch die Feststellachse (A) verläuft, miteinander verbunden sind.

4. Schaufel (10) nach dem vorstehenden Anspruch, wobei die Hülse (26) an den Körper (24) geklebt ist.

5. Schaufel (10) nach Anspruch 3 oder 4, wobei mindestens ein Druckschutzring (48, 50) um die Halbschalen (26a, 26b) angebracht ist, um sie gespannt gegen den Körper (24) zu halten, wobei sich dieser Druckschutzring (48, 50) um die Feststellachse (A) erstreckt.

6. Schaufel (10) nach dem vorstehenden Anspruch, wobei ein unterer Druckschutzring (48) auf einer tiefliegenden zylindrischen Fläche (44) der Hülse (26) angebracht ist und sich um mindestens einen Teil des freien Endes (28) des Körpers (24) erstreckt.

7. Schaufel (10) nach Anspruch 5 oder 6, wobei ein oberer Druckschutzring (50) auf einer hochliegenden zylindrischen Fläche (46a) der Hülse (26) angebracht ist und sich um mindestens einen Teil des Wulstes (32) des Körpers (24) erstreckt.

8. Schaufel (10) nach einem der vorstehenden Ansprüche, wobei sich ein Klauenring (52) um die Feststellachse (A) erstreckt und um die Strebe (30) herum umliegend zwischen dem Wulst (32) und dem Schaufelblatt (12) angebracht ist, wobei dieser Klauenring (52) äußere Klauenzähne (84) umfasst, die konfiguriert sind, um mit dem System (34) zusammenzuwirken.

9. Schaufel (10) nach Anspruch 8, in Abhängigkeit von Anspruch 7, wobei der Klauenring (52) konfiguriert ist, um auf der hochliegenden zylindrischen Fläche (46a) der Hülse (26) angebracht zu werden.

10. Baugruppe, umfassend eine Schaufel (10) nach einem der vorstehenden Ansprüche und ein System (34) zur Steuerung der Feststellposition dieser Schaufel, wobei das System (34) mindestens zwei Kugelführungslager (54, 56) umfasst, die sich um die Feststellachse (A) erstrecken.

11. Baugruppe nach dem vorstehenden Anspruch, wobei sich ein erstes Führungslager (54) zwischen dem tiefliegenden und dem mittleren Abschnitt oder an der Verbindungsstelle zwischen dem freien Ende (28) und dem Wulst (32) des Körpers (24) befindet und ein zweites Führungslager (56) sich zwischen dem mittleren und dem hochliegenden Abschnitt oder an der Verbindungsstelle zwischen dem Wulst (32) und der Strebe (30) befindet.

12. Baugruppe nach dem vorstehenden Anspruch, wobei die Schaufel (10) wie in den Ansprüche 6 und 7 definiert ist, wobei sich das erste Führungslager (54) mindestens teilweise um den unteren Druckschutzring (48) erstreckt und das zweite Führungslager (56) sich mindestens teilweise um den oberen Druckschutzring (50) erstreckt.

13. Baugruppe nach einem der Ansprüche 10 bis 12, wobei das System (34) eine Schale (58) umfasst, die sich um die Feststellachse (A) erstreckt und zwischen der Hülse (26) und den Führungslagern (54, 56) eingefügt ist, wobei diese Schale (58) eine Bodenwand (58b) umfasst, die sich querliegend zur Achse (A) erstreckt und die eine Aussparung (60) zur Aufnahme des freien Endes (28) des Körpers (24) umfasst, wobei diese Aussparung (60) im Querschnitt am tiefliegenden Abschnitt eine komplementäre Form zu diesem freien Ende (28) aufweist.

14. Baugruppe nach Anspruch 13, wobei die Schaufel (10) wie in Anspruch 8 oder 9 definiert ist, wobei die Schale (58) innere Klauenzähne (82) umfasst, die konfiguriert sind, um mit den äußeren Klauenzähnen (84) des Klauenrings (52) zusammenzuwirken.

15. Turbotriebwerk, insbesondere eines Luftfahrzeugs, das mindestens eine Schaufel (10) nach einem der Ansprüche 1 bis 9 oder mindestens eine Baugruppe nach einem der Ansprüche 10 bis 14 umfasst.

## Claims

1. A variable pitch propeller vane (10) for an aircraft turbine engine, this vane (10) comprising a blade (12) connected to a root (14), the root (14) comprising a solid body (24) housed in an annular barrel (26) which extends around a pitch axis (A) of the vane,
**characterised in that** the body (24) comprises:
- a free end (28) located on the side opposite the blade (12), this free end (28) being configured to cooperate in a form-fitting manner with a system (34) for controlling the pitch of the vane, and comprising a cross-section, referred to as low section, which has a non-circular shape and a value Sb,
- a stilt (30) located on the side of the blade (12), this stilt (30) comprising a cross-section, referred to as high section, which has a value Sh, and
- a bulb (32) located between the free end (28) and the stilt (30), this bulb (32) having in section a convex rounded shape extending between the free end and the stilt and comprising at the summit of this shape a cross-section, referred to as middle section, which has a maximum value Sm which is greater than Sh and Sb,
and **in that** the barrel (26) is attached to the body (24) and covers and conforms to at least one portion of the bulb (32) and the stilt (30), the barrel (26) having a shape complementary in section to the bulb (32) at the level of said middle section, and to the stilt (30) at the level of said high section.

2. The vane (10) according to claim 1, wherein:
- the low section is eccentric with respect to the pitch axis (A), and/or
- the middle section has a circular shape, and/or
- the high section has a non-circular shape.

3. The vane (10) according to one of the preceding claims, wherein the barrel (26) is made of two half-shells (26a, 26b) fitted and attached to the body (24), the half-shells (26a, 26b) being joined at the level of a joint plane which passes through said pitch axis (A).

4. The vane (10) according to the preceding claim, wherein the barrel (26) is glued to the body (24).

5. The vane (10) according to claim 3 or 4, wherein at least one shrink-fitting ring (48, 50) is mounted around the half-shells (26a, 26b) to maintain them tightened against the body (24), this shrink-fitting ring (48, 50) extending around the pitch axis (A).

6. The vane (10) according to the preceding claim, wherein a lower shrink-fitting ring (48) is mounted on a low cylindrical surface (44) of the barrel (26), and extends around at least one portion of the free end (28) of the body (24).

7. The vane (10) according to claim 5 or 6, wherein an upper shrink-fitting ring (50) is mounted on a high cylindrical surface (46a) of the barrel (26), and extends around a portion of the bulb (32) of the body (24).

8. The vane (10) according to any of the preceding claims, wherein a dog clutch ring (52) extends around the pitch axis (A) and is captively mounted around the stilt (30), between the bulb (32) and the blade (12), this dog clutch ring (52) comprising external dog teeth (84) configured to cooperate with said system (34).

9. The vane (10) according to claim 8, in dependence on claim 7, wherein the dog clutch ring (52) is configured to be mounted on the high cylindrical surface (46a) of the barrel (26).

10. An assembly comprising a vane (10) according to any of the preceding claims and a system (34) for controlling the pitch of that vane, wherein the system (34) comprises at least two rolling guide bearings (54, 56), which extend around the pitch axis (A).

11. The assembly according to the preceding claim, wherein a first guide bearing (54) is located between the low and middle sections or at the junction between the free end (28) and the bulb (32) of the body (24), and a second guide bearing (56) is located between the middle and high sections or at the junction between the bulb (32) and the stilt (30).

12. The assembly according to the preceding claim, the vane (10) being as defined in claims 6 and 7, wherein the first guide bearing (54) extends at least partly around the lower shrink-fitting ring (48), and the second guide bearing (56) extends at least partly around the upper shrink-fitting ring (50).

13. The assembly according to one of claims 10 to 12, wherein the system (34) comprises a cup (58) extending around the pitch axis (A) and interposed between the barrel (26) and the guide bearings (54, 56), this cup (58) comprising a bottom wall (58b) which extends transversely to the axis (A) and which has a recess (60) for receiving the free end (28) of the body (24), this recess (60) having a shape complementary in section to this free end (28), at the level of said low section.

14. The assembly as claimed in claim 13, the vane (10) being as defined in claim 8 or 9, wherein the cup (58) comprises internal dog teeth (82) configured to cooperate with the external dog teeth (84) of said dog clutch ring (52).

15. A turbine engine, in particular for an aircraft, comprising at least one vane (10) according to any of claims 1 to 9 or at least one assembly according to any of claims 10 to 14.
